Europäisches Patentamt

European Patent Office

Office européen des brevets

(11) Veröffentlichungsnummer : **0 061 650**
**B1**

# (12) EUROPÄISCHE PATENTSCHRIFT

(45) Veröffentlichungstag der Patentschrift :
26.06.85

(21) Anmeldenummer : 82102141.7

(22) Anmeldetag : 17.03.82

(51) Int. Cl.⁴ : **F 16 K 15/14, F 16 K 47/00**

(54) **Drosselventil.**

(30) Priorität : 27.03.81 DE 3112257

(43) Veröffentlichungstag der Anmeldung :
06.10.82 Patentblatt 82/40

(45) Bekanntmachung des Hinweises auf die Patenterteilung : 26.06.85 Patentblatt 85/26

(84) Benannte Vertragsstaaten :
AT CH DE FR IT LI

(56) Entgegenhaltungen :
AT-B- 264 939
DE-A- 1 650 440
DE-B- 1 249 619
US-A- 3 153 423

(73) Patentinhaber : Knorr-Bremse GmbH
Moosacher Strasse 80
D-8000 München 40 (DE)

(72) Erfinder : Michalka, Helmut
Alpspitzweg 8
D-8016 Heimstetten (DE)

## Beschreibung

Die Erfindung bezieht sich auf ein Drosselventil gemäß dem Oberbegriff des Anspruches 1.

Bei einem herkömmlichen Drosselrückschlagventil besteht die Dichtungsanordnung aus einem Ventilteller, der in dem Zwischenraum des Ventilkörpers eingesetzt ist. Der Ventilteller besitzt einen Dichtungssitz für das radial innere Dichtungsteil, das aus einem inneren Abschnitt mit einer zylindrischen Bohrung und einem den inneren Teil ringförmig umspannenden äußeren Teil besteht. Während das Innere von dem Einstellende der Drosselschraube durchdrungene Teil aus einem beschränkt elastischen Material, insbesondere Polytetrafluoräthylen besteht, ist das äußere Teil aus einem Material hoher Elastizität, insbesondere Gummi, ausgebildet, der ständig eine radial nach Innen gerichtete Druckkraft auf das innere Teil ausübt.

Der Ventilteller ist außerdem Träger des radial äußeren Dichtungselementes mit Rückschlagklappenfunktion, das eine Bohrung zu dem einen Druckmittelanschluß abdeckt. Um das radial innere Dichtungselement in dem Ventilsitz des Ventils dicht einzuspannen, ist eine Abdeckscheibe und ein Federring vorgesehen, die von einem Ventilkörper gegen die Ventilscheibe gepreßt werden, wenn diese zur Montage des Drosselventils in eine Bohrung in einem Ventilgehäuse fest eingeschraubt wird. Der Ventilkörper weist seinerseits eine zentrale Bohrung mit einem Innengewindeabschnitt für die Drosselschraube auf.

Durch die AT-B-264 939 und die DE-A-16 50 440 sind weitere Drosselrückschlagventile der eingangs genannten Art bekannt. Damit einerseits die Rückschlagklappenfunktion des Ventils unabhängig von dem gewählten Drosselquerschnitt gesichert ist, andererseits aber auch der gewünschte Drosselquerschnitt genau und feinfühlig einstellbar ist, müssen die einzelnen Ventilbauteile der bekannten Drosselrückschlagventile besonders eng toleriert sein, die damit einen hohen Fertigungsaufwand bedingen. Außerdem muß die Montage mit großer Sorgfalt erfolgen, damit die eng tolerierten Ventilbauteile die gewünschte Funktion im eingebauten Zustand auch während einer angemessenen Lebenszeit sicherstellen können. Hierdurch ist außer dem Fertigungsaufwand noch ein erheblicher Montageaufwand erforderlich, so daß eine Massenfertigung der bekannten Ventile auf erhebliche Schwierigkeiten stößt.

Aufgabe der Erfindung ist es daher, ein Ventil der eingangs genannten Art anzugeben, das eine sichere Rückschlagklappenfunktion aufweist und dessen Drosselquerschnitt außerdem feinfühlig mit großer Genauigkeit einstellbar ist. Das Ventil soll trotz dieser Bedingungen mit vergleichsweise besonders geringem Fertigungs- und Montageaufwand herstellbar sein, wobei Fertigungs- und Montagetoleranzen auf einfache Weise beherrschbar sind, so daß das Ventil zur Massenfertigung in großer Stückzahl besonders geeignet ist.

Die vorstehende Aufgabe wird erfindungsgemäß mit den kennzeichnenden Merkmalen des Anspruches 1 gelöst.

Vorteilhafte Ausführungen nach der Erfindung ergeben sich aus den Merkmalen der Unteransprüche.

Die Erfindung wird mehr im einzelnen anhand einer bevorzugten Ausführungsform beschrieben, die in einer Zeichnung dargestellt ist. Hierin zeigt:

Figur 1 ein schnittbild durch ein erfindungsgemäßes Drosselventil mit Rückschlagklappenfunktion,

Figur 2 ein entsprechendes Schnittbild durch das Drosselventil nach Fig. 1 mit unterbundener Rückschlagklappenfunktion.

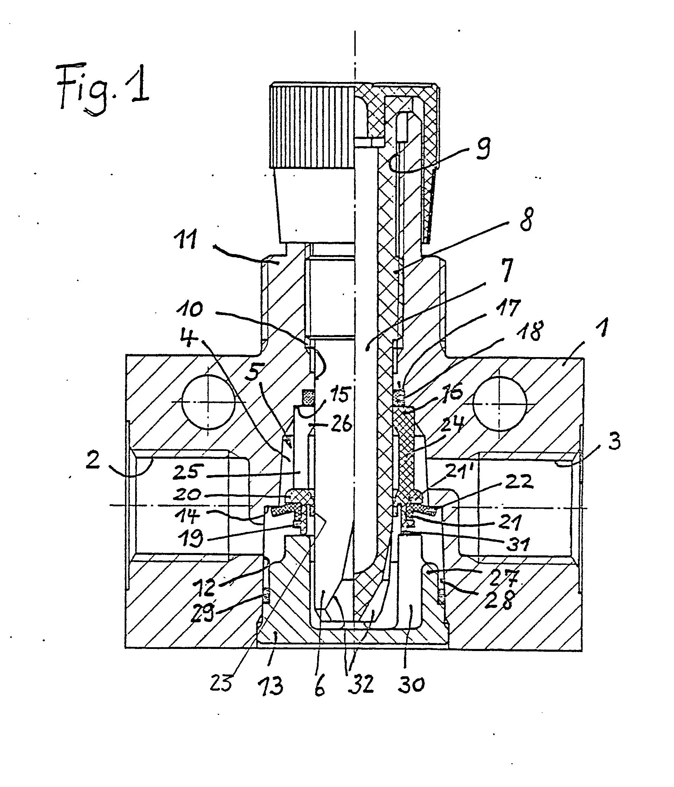

Figur 1 besteht aus einem Ventilkörper 1 aus Leichtmetalldruckguß mit zwei entgegengesetzten Druckmittelanschlüssen 2 und 3, die hier als Gewindebohrungen ausgebildet sind. Die beiden Druckmittelanschlüsse 2 und 3 stehen über einen Zwischenraum 4 miteinander in Verbindung, in dem ein Dichtungskörper 5 angeordnet ist, der von dem Einstellende 6 einer Drosselschraube 7 durchdrungen ist, die mit einem Außengewindeabschnitt 8 in einen Innengewindeabschnitt 9 einer zentralen Bohrung 10 in einem Halsteil 11 des Ventilkörpers 1 eingreift. Die quer zu den Druckmittelanschlüssen verlaufende Bohrung 10 schließt an den Zwischenraum 4 an, der eine runde Montageöffnung 12 aufweist, über die der Dichtungskörper 5 einsetzbar ist und die durch einen Deckel 13 aus Leichtmetalldruckguß druckmitteldicht verschließbar ist. Die Montageöffnung 12 liegt dem Halsansatz 11 mit der Bohrung 10 für die Drosselschraube axial gegenüber. Der zur Achse durch die Drosselschraube und die Deckelöffnung im wesentlichen rotationssymmetrisch ausgebildete Zwischenraum 4 ist in einzelne axial aufeinander folgende Abschnitte gegliedert, die vom äußeren Rand der Montageöffnung 12 zur Bohrung 10 für die Drosselschraube hin im Durchmesser zunehmend abnehmen. Damit kann ein Formkern nach dem Eindringen und Erhärten des in eine Gußform gedrückten Leichtmetalls zum Herstellen eines Ventilkörpers 1 über die Montageöffnung 12 leicht abgezogen werden.

In dem auf diese Weise gebildeten Zwischenraum ist lediglich eine Ventilsitzfläche 14 nachzubearbeiten. Der eine Druckmittelanschluß 2 schließt (in Fig. 1) unterhalb des Ventilsitzes an den Zwischenraum 4 an und der andere Druckmittelanschluß 3 schließt (in Fig. 1) oberhalb des Ventilsitzes an den Zwischenraum 4 an.

Der Zwischenraum 4 umfaßt eine Schulter 15, an der sich das eine Ende 16 des Dichtungskörpers 5 abstützt. Von der Schulter 5 abgesetzt ist ein Ringraum 17 zum Eingriff eines Dichtungsringes 18, der die Bohrung 10 mit der in ihr axial verstellbaren Drosselschraube 7 nach außen druckmitteldicht abschließt. Der Dichtungsring

stützt sich teilweise auch an der Stirnfläche am Ende 16 des Dichtungskörpers 5 ab. Der hülsenförmige, von dem zylindrischen Einstellende 6 der Drosselschraube durchdrungene Dichtungskörper 5 besteht an seinem unteren Ende (Fig. 1) aus einem dem Deckel 13 zugewandten, axial relativ schmal ausgebildeten, geschlossenen Ringabschnitt 19, der das Einstellende 6 mit Spiel umfaßt. An diesem Ringabschnitt 19 schließt ein mittlerer, axial ebenfalls relativ schmal ausgebildeter Ringabschnitt 20 an, der außenseitig mit einer umlaufenden Nut 21 versehen ist, in die ein im Querschnitt « L »-förmiges Dichtungsteil 22 aus einem hochelastischem Material, z. B. Gummi, eingeknüpft ist. Innenseitig ist der mittlere Ringabschnitt 20 des Dichtungskörpers mit einer Dichtungslippe 23 versehen, die unter radialer Vorspannung am Umfang des Einstellendes 6 der Drosselschraube 7 anliegt. An den mittleren Ringabschnitt schließt ein axial relativ längerer oberer Ringabschnitt 24 (Fig. 1) des Dichtungskörpers 5 an, der aus mehreren (beispielsweise acht) durch radiale Schlitze voneinander getrennten Segmenten 25 besteht, die über den Umfang des Dichtungskörpers 7 gleichmäßig verteilt sind. In Fig. 1 ist auf der linken Seite zur Achse durch die Drosselschraube 7 eines der Segmente 25 geschnitten, während der Schnitt auf der rechten Seite zur Schraubenachse in einem Schlitz zwischen zwei Segmenten verläuft. Die einzelnen Segmente 25 schließen unmittelbar an den mittleren Ringabschnitt 20 mit der inneren Dichtungslippe 23 an und umfassen das Einstellende 6 der Drosselschraube 7 über einem wesentlichen Abschnitt ihrer axialen Länge mit radialem Spiel. Die oberen Enden (Fig. 1) der einzelnen Segmente 25 des Dichtungskörpers 5 besitzen innenseitig nockenartige Vorsprünge 26, mit denen sie sich am Umfang des Einstellendes 6 der Drosselschraube abstützen. Außerdem bilden die radial inneren Abschnitte der oberen Stirnflächen der Segmente 25 eine vielteilige Abstützfläche für den Dichtungsring 18, während die radial äußeren Abschnitte der Stirnfächen der Segmente 25 an der Schulter 15 anliegen.

Der nach außen flache, im wesentlichen mit der Außenfläche des Ventilkörpers 1 abschließende Deckel 13 aus Leichtmetalldruckguß besitzt innenseitig einen vorspringenden Rand 27, der außenseitig etwa auf halber Höhe des Randes zur Bildung eines Spaltes 28 zwischen dem Deckelrand und der Öffnungswandung etwas radial nach innen einspringt. In den freien Spalt 28 greift ein Dichtungsring 29 ein, der die Montageöffnung druckmitteldicht abschließt.

Innenseitig grenzen an den Deckelrand mehrere, z. B. vier Stege 30, die über den Umfang des Deckelrandes gleichmäßig verteilt sind, und die den Deckelrand axial überragen. In Fig. 1 ist auf der linken Seite zur Achse durch die Drosselschraube einer der Stege 30 geschnitten, während auf der rechten Seite der Schraubenachse der Deckelschnitt zwischen zwei benachbarten Stegen 30 hindurch verläuft, von denen der eine in Fig. 1 in der Ansicht dargestellt ist. Auf den äußeren Stirnflächen der Stege 30 stützt sich das hintere Ende (Fig. 1) des Dichtungskörpers 5 ab, der damit zwischen dem Deckel 13 und der Schulter 15 des Zwischenraumes 4 axial eingespannt ist. Zum Ausgleich der verschiedenen axialen Längentoleranzen weist der Dichtungskörper 5 an seinem unteren Ende eine Knautschzone 31 aus dünnem, stauchfähigem Material auf, das mit dem Dichtungskörper 5 einstückig ist. Zur Montage wird in dem Zwischenraum 4 des Ventilkörpers 1 von der Montageöffnung 12 aus zunächst der Dichtungsring 18 in die offene Ringnut 17 eingesetzt. Sodann wird der Dichtungskörper 5 eingesetzt, um anschließend die Montageöffnung mit dem Deckel 13 und den aufgesetzten Dichtungsring 29 dicht zu verschließen. Hierbei wird der Deckel im Öffnungsrand der Montageöffnung verstemmt. Die Verhältnisse sind dabei so gewählt, daß sich das untere Ende des Dichtungskörpers 5 mit seiner Knautschzone auf den Stirnflächen der Stege 30 an dem in der Montageöffnung 12 verstemmten Deckel 13 abstützt, ohne daß der Dichtungskörper 5 dabei übermäßig axial gestaucht wird. Es hat sich herausgestellt, daß es nicht in jedem Falle erforderlich ist, den Deckel mit einer umlaufenden Schulter bis zum Kontakt mit einer einspringenden Schulter in der Montageöffnung in diese hineinzudrücken, um auf diese Weise eine vorbestimmte Einschlagtiefe zur Verfügung zu haben, die nicht überschritten werden kann. Wie Fig. 1 zeigt, kann mit Werkzeugen, die den Deckel 13 in der Montageöffnung 12 verstemmen und dabei eine bestimmte auf den Deckel zur Wirkung kommende Einschlagkraft nicht überschreiten, sichergestellt werden, daß der Deckel nicht zu tief in die Montageöffnung hineingedrückt wird. Unterschiedliche Einschlagtiefen des Deckels werden durch die Knautschzone am unteren Ende des Dichtungskörpers 5 ausgeglichen, ohne daß dieser, wie gesagt, übermäßig axial verspannt wird.

Im eingebauten Zustand des Dichtungskörpers stützt sich der radial nach außen vorspringende Ringabschnitt des « L »-förmigen Dichtungselementes 22 unter Vorspannung an der Sitzfläche 14 ab, d. h., daß die Sitzfläche 14 gegenüber der radial oberen Stirnfläche 21' der Nut 21 axial etwas tiefer liegt, wie Fig. 1 deutlich erkennen läßt. Im eingebauten Zustand ist daher der radial nach außen weisende Ringabschnitt des in die Nut 21 eingeknüpften Dichtungsteiles unter der Anlage an den Sitzflächen 14 etwas nach innen abgebogen.

Da das « L »-förmige Dichtungselement 22 mit seinem axialen Ringabschnitt unter radialer Vorspannung in der Nut 21 des Dichtungskörpers liegt, ist das Gesamtprofil des Dichtungselementes derart zu wählen, daß durch diese radiale Vorspannung der radial nach außen vorspringende Ringabschnitt nicht nach unten zum Abwinkeln kommt. Es wäre dann nicht mehr sichergestellt, daß der äußere Ringabschnitt im eingebauten Zustand des Dichtungskörpers unter ausreichender elastischer Vorspannung an der Sitzfläche 14 anliegt.

Um ein solches Abwinkeln nach dem Aufknüpfen des axialen Ringabschnittes des Dichtungsteiles 22 in die Nut 21 zu vermeiden, kann der axiale Ringabschnitt im Querschnitt leicht « S »-förmig ausgebildet sein, so daß nur ein unterer Teil des axialen Ringabschnittes mit radialer Vorspannung in die Nut 21 eingreift, während ein anschließender Teil des axialen Ringabschnittes, an den der radiale Ringabschnitt unmittelbar anschließt, im wesentlichen ohne Vorspannung in der Nut 21 liegt.

Der erfindungsgemäße Dichtungskörper 5 ist vorzugsweise, einschließlich der Dichtungslippe 23 und der Knautschzone 31 am unteren Ende des Körpers, einstückig ausgebildet.

Lediglich das « L »-förmige Dichtungselement 22 ist, wie gesagt, in die Nut 21 des Dichtungskörpers eingeschnappt. Während das Dichtungselement 22 aus einem hochelastischen Werkstoff, z. B. Gummi, besteht, besteht der Dichtungskörper aus einem relativ weniger elastischen Kunststoff, vorzugsweise einem POM-Kunststoff. Es hat sich herausgestellt, daß ein Dichtungskörper, vorallem aus einem POM-Kunststoff, mit einer inneren Dichtungslippe versehen werden kann, die mit ausreichender Vorspannung am Umfang des Einstellendes 6 der Drosselschraube 7 dicht anliegt. Das Einstellende 6 der Drosselschraube 7 besitzt wenigstens eine Drosselnut 32, die sich vom äußeren Ende des Einstellendes weg keilförmig verjüngt. Die Drosselnut 32 ist in Fig. 1 in der linken Hälfte des Einstellendes in der Draufsicht und in der rechten Hälfte im Schnitt gezeigt. Es kann besonders zweckmäßig sein, zwei Drosselnuten vorzusehen, die um 180° versetzt liegen, und die unterschiedliche Tiefenprofile und axiale Längen aufweisen.

In Fig. 1 ist die Drosselschraube voll in den Ventilkörper 1 eingeschraubt, so daß im wesentlichen kein Druckmittel von dem Anschluß 2 zu dem Anschluß 3 gelangen kann, da in dieser Stellung das obere Ende der Drosselnut 32 unterhalb der Dichtungslippe 23 zu liegen kommt. Andererseits kann Druckmittel in umgekehrter Richtung vom Anschluß 3 über die Rückschlagwirkung des Dichtungselements 22 zum Anschluß 2 gelangen. Wird die Drosselschraube aus der in Fig. 1 gezeigten Stellung soweit aus dem Ventilkörper herausgeschraubt, daß die Drosselnut 32 nach oben (Fig. 1) über die Dichtungslippe 23 hinausragt, dann vermag Druckmittel vom Anschluß 2 über die Drosselnut und den Ringraum zwischen der Drosselschraube 7 und den Stegen 24 des Dichtungskörpers 5 sowie zwischen die Stege 24 hindurch in den Zwischenraum 4 und weiter zum Anschluß 3 zu strömen. Die Drosselung des Druckmittels ist dabei druch das jeweilige Nutenprofil gegeben, mit dem die Dichtungslippe 23 überbrückt wird. Je weiter die Drosselschraube aus dem Ventilkörper herausgeschraubt wird, umso geringer wird die Drosselwirkung. Soll die Rückschlagklappenfunktion des Dichtungselements

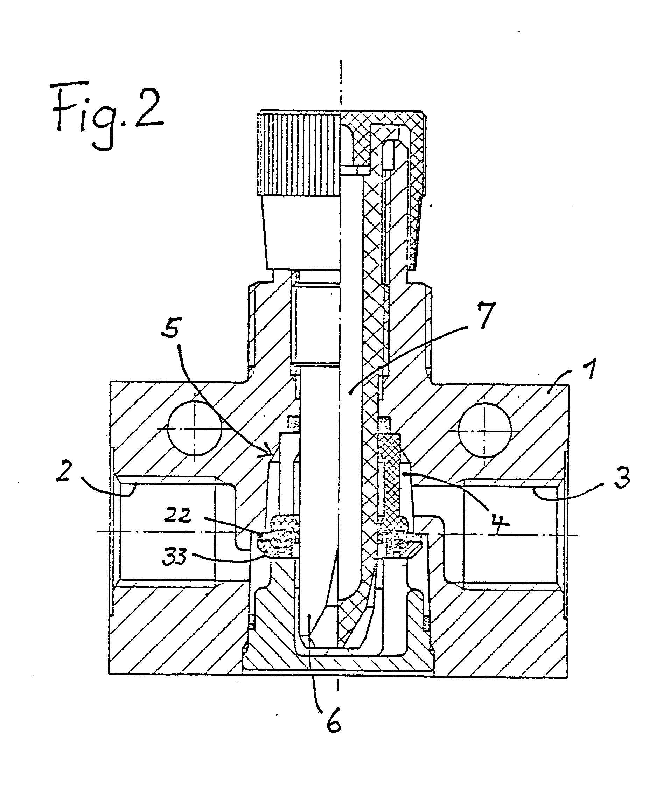

22 aufgehoben werden, so wird, wie Fig. 2 zeigt, bei der Montage des Drosselventils ein Stützring 33 mit in den Zwischenraum eingelegt, der sich zusammen mit dem unteren Ende des Dichtungskörpers auf den Stirnflächen der Stege 30 des Deckels abstützt. Der Stützring 33 ist derart ausgebildet, daß im montierten Zustand des Drosselventils der radial nach auß im montierten Zustand des Drosselventils der radial nach außen weisende Ringabschnitt des Dichtungselementes zwischen dem Stützring 33 und der Sitzfläche 14 des Rückschlagventils fest eingespannt ist.

Eine solche Lösung bietet den Vorteil, daß das gleiche Drosselventil ohne oder mit Rückschlagfunktion ausgebildet sein kann, je nachdem, ob der Stützring eingesetzt ist oder nicht.

Sollte der Dichtungskörper aus einem Kunststoffmaterial bestehen, das im Bereich der Dichtungslippe 23 Ermüdungserscheinungen aufweist, so daß die Lebenszeit des Drosselventils zu wünschen übrig läßt, dann kann es zweckmäßig sein, wenn der hülsenförmige Dichtungskörper gemäß einer Weiterbildung der Erfindung im uneingespannten Zustand eine geringfügig nach innen gewölbte tonnenförmige Gestalt aufweist. Der Dichtungskörper kann dann derart zwischen den Deckel und der Schulter im Zwischenraum des Ventilkörpers axial eingespannt sein, daß er eine radial nach innen gerichtete Druckkraft abgibt, mit der Die Dichtungslippe sicher in ihrer Dichtungsstellung mit der genügenden Anpreßkraft am Umfang des Einstellendes der Drosselschraube gehalten wird.

Es ist klar, daß dann gegebenenfalls auf eine besondere Dichtungslippe verzichtet werden kann und der Dichtungskörper mit einer bestimmten radial nach innen gerichteten Druckkraft anstele auf die Dichtlippe auf einen zylindrischen Ringabschnitt einwirkt, der die Dichtfunktion übernimmt und der einstückig mit dem Dichtungskörper sein kann.

**Patentansprüche**

1. Drosselventil, z. B. Drosselrückschlagventil, mit einem Ventilkörper (1), einem nach außen druckmitteldichten Verbindungsraum (4) innerhalb des Ventilkörpers (1) zwischen zwei Druckmittelanschlüssen (2, 3), einer in eine Gewindebohrung (10) des Ventilkörpers (1) quer zu den Druckmittelanschlüssen (2, 3) eingreifenden, in ein zylindrisches Einstellende (6) mit wenigstens einer sich vom Ende weg verjüngenden Drosselnut (32) auslaufenden und mit dem Einstellende (6) in den Verbindungsraum (4) hineinragenden Drosseleinstellschraube (7) und mit einer in die Druckmittelverbindung zwischen die Druckmittelanschlüsse (2, 3) eingeschalteten Dichtungsanordnung (5 ; 21, 22 ; 23, 6), die einerseits mit einem ersten, radial äußeren ringförmigen Dichtungsteil (22) gegebenenfalls mit Rückschlagfunktion an einer umlaufenden Sitzfläche (14) des Verbindungsraumes (4) und andererseits mit einem zweiten, radial inneren ringförmigen Dichtungsteil (23) im Nutbereich des Einstellendes (6) der Drosselschraube (7) am Außenumfang des Einstellendes (6) der Drosselschraube (7) am Außenumfang des Einstellendes (6) dichtend anliegt, und die Dichtungsanordnung aus einem von dem Einstellende (6) durchsetzten hülsenförmigen Dichtungskörper (5) gebildet ist, der mit dem äußeren und dem inneren Dichtungsteil (22, 23) versehen ist und axial zwischen einer inneren Schulter (15) des Verbindungsraumes (4) und einem Deckel (13) des Ventilkörpers (1) eingespannt ist, der in eine zur Drosselschraube (7) koaxiale Montageöffnung (12) des Verbindungsraumes (4) dicht eingreift, dadurch gekennzeichnet, daß der Dichtungskörper (5) mit seiner beiden Enden (16, 19) sich abstützt, zum Toleranzausgleich bei seiner axialen Einspannung zwischen dem Deckel (13) und der Schulter (15) des Zwischenraumes (4) des Ventilkörpers (1) und eine die Dichtfunktionen der Dichtungsteile (22, 23) unbeeinflußende Knautschzone (31) aus einem schmalen, mit dem Dichtungskörper (5) einstückigen Materialstreifen an dem dem Deckel (13) zugewandten Ende des Dichtungskörpers (5) aufweist und daß die Schulter (15) im Zwischenraum (4) des Ventilkörpers (1) zum Abstützen des anderen Endes (16) des Dichtungskörpers (5) an eine abgesetzte Ringausnehmung (17) zur Aufnahme eines Dichtungsringes (18) anschließt, der den Spalt zwischen dem Ventilkörper (1) und der Drosselschraube (7) abdichtet und der sich an dem anderen Ende (16) des Dichtungskörpers (5) abstützt.

2. Drosselventil nach Anspruch 1, dadurch gekennzeichnet, daß der Dichtungskörper (5) aus einem thermoplastischen Kunststoff (z. B. POM) einstückig mit dem inneren lippenförmigen Dichtungsteil (23) ist, das unter radialer Vorspannung am Außenumfang des Einstellendes der Drosselschraube anliegt.

3. Drosselventil nach Anspruch 1 oder 2, dadurch gekennzeichnet, daß der Dichtungskörper (5) im Bereich des inneren Dichtungsteils (23) eine äußere umlaufende Nut (21) aufweist, in die das äußere ringförmige Dichtungsteil (22) aus einem hochelastischen Werkstoff (Gummi) eingreift, der eine wesentlich größere Elastizität aufweist als der Dichtungskörper (5) mit dem inneren Dichtungsteil (23).

4. Drosselventil nach einem oder mehreren der vorstehenden Ansprüche, dadurch gekennzeichnet, daß der Dichtungskörper (5) an seinem zur Schulter (15) des Verbindungsraumes (4) gewandten anderen Ende (16) wenigstens eine Durchbrechung aufweist, die an den inneren Dichtungsteil (23) grenzt und die das über die Drosselnut (32) geführte Druckmittel an den einen Druckmittelanschluß (3) anschließt.

5. Drosselventil nach einem oder mehreren der Ansprüche 1 bis 3, dadurch gekennzeichnet, daß der Dichtungskörper (5) an seinem anderen Ende (16) eine Vielzahl von relativ schmalen Längsschlitzen aufweist, die über den Umfang des Dichtungskörpers (5) gleichmäßig verteilt sind und zum Ende hin auslaufen.

6. Drosselventil nach Anspruch 5, dadurch gekennzeichnet, daß der dem Deckel (13) zugewandte eine Endabschnitt des Dichtungskörpers aus einem axial relativ schmalen geschlossenen Ringabschnitt (19) besteht, der das Einstellende (6) der Drosselschraube (7) mit Spiel umfaßt, daß an dem einen Endabschnitt ein weiterer axial relativ schmaler mittlerer Ringabschnitt (20) anschließt, der außenseitig mit der umlaufenden Nut (21) zum Einknüpfen des äußeren Dichtungsteiles (22) und innenseitig mit der inneren Dichtungslippe (23) versehen ist und daß an dem mittleren Ringabschnitt (20) der der Schulter (15) des Zwischenraumes (4) zugewandte axial relativ längere Abschnitt (24) des Dichtungskörpers (7) anschließt, der aus mehreren durch radiale Schlitze voneinander getrennten Segmenten (25) besteht, die sich unmittelbar an die innere Dichtungslippe (23) anschließen, das Einstellende (6) des Dichtungskörpers (1) mit Speil umfassen und sich mit radial nach innen gewandten nockenartigen Vorsprüngen (26) an dem Einstellende (6) der Drosselschraube (7) abstützen.

7. Drosselventil nach einem oder mehreren der vorstehenden Ansprüche, dadurch gekennzeichnet, daß innenseitig am Deckel (13) mehrere über den Umfang gleichmäßig verteilte Stege (30) vorhanden sind, die den inneren Deckelrand (27) überragen und auf denen sich die Knautschzone (31) des Dichtungskörpers abstützt.

8. Drosselventil nach einem oder mehreren der vorstehenden Ansprüche, dadurch gekennzeichnet, daß das radial äußere Dichtungselement (22) im eingebauten Zustand des Dichtungskörpers (5) mit einem freien Ringabschnitt unter radialer Vorspannung an der Sitzfläche (14) des Ventilkorpers (1) zur Bildung eines Rückschlagventils (14, 22) anliegt und daß wahlweise ein Stützring (33) vorgesehen ist, der sich am Deckel abstützt und der zur Ausschaltung der Rückschlagfunktion den freien Ringabschnitt des radial äußeren Dichtungselementes (22) zwischen sich und der Sitzfläche (14) einspannt (Figur 2).

9. Drosselventil nach Anspruch 1, dadurch gekennzeichnet, daß der hülsenförmige Dichtungskörper (5) im eingespannten Zustand eine geringfügig nach innen gewölbte tonnenförmige Gestalt aufweist und in einer auf das innere Dichtungsteil (23) eine radial nach innen gerichtete Druckkraft ausübenden Weise zwischen der Schulter (15) in dem Zwischenraum (4) des Ventilkörpers (1) und dem Deckel (13) eingespannt ist.

10. Drosselventil nach Anspruch 9, dadurch gekennzeichnet, daß das radial innere Dichtungsteil (23) ein ringförmiger Zylinderabschnitt ist.

11. Drosselventil nach einem oder mehreren der vorstehenden Ansprüche, dadurch gekennzeichnet, daß der Zwischenraum (4) und die Montageöffnung (12) gegenüber der Achse der Drosselschraube (7) im wesentlichen achssymmetrisch ausgebildet sind und die axial aufeinander folgenden Abschnitte (14, 15, 17) des Zwischenraumes (4) vom äußeren Rand der Montageöffnung (12) zur Bohrung (10) für die Drosselschraube (7) im Durchmesser zunehmend abnehmen.

**Claims**

1. Throttle valve, e.g. one-way restrictor, comprising a valve body (1) ; an outwardly fluid-proof communication chamber (4) inside the valve body (1) between two fluid ports (2, 3) ; a throttle adjustment screw (7) engaging a tapped hole (10) in the valve body (1) at right-angles to the fluid ports (2, 3), terminating at a cylindrical adjustment end (6) with at least one throttle screw (32) tapering off from the end, and projecting at the adjustment end (6) into the communication chamber (4) ; and a sealing arrangement (5, 21, 22, 23, 6) inserted in the fluid connection between the fluid ports (2, 3), which sealing arrangement seals off firstly a circumferential seat surface (14) of the communication chamber (4) via a first, radially outer, annular sealing part (22) having if necessary a non-return action, and secondly the outer circumference of the adjustment end (6) via a second, radially inner, annular sealing part (23) in the groove area of the adjustment end (6) of the throttle screw (7), and the sealing arrangement being formed from a sleeve-shaped sealing body (5) encompassing the adjustment end (6), which sealing body (5) is furnished with the outer and inner sealing parts (22, 23) and is clamped axially between an inner shoulder (15) of the communication chamber (4) and a cover (13) of the valve body (1), the said valve body (1) being engaged in sealing fashion in a communication chamber access opening (12) coaxial to the throttle screw (7), wherein the sealing body (5) is supported by its two ends (16, 19) — to compensate for the tolerance for axial clamping — between the cover (13) and the shoulder (15) of the space (4) of the valve body (1) and exhibits a deformation zone (31) which does not influence the sealing functions of the sealing parts (22, 23), the said zone consisting of a narrow strip of material in one piece with the sealing body (5) and being located at that end of the sealing body (5) facing towards the cover (13), and wherein the shoulder (15) in the space (4) in the valve body (1) adjoins, for supporting the other end (16) of the sealing body (5), an offset ring recess (17) for holding a sealing ring (18) which seals the gap between the valve body (1) and the throttle screw (7) and which is supported by the other end (16) of the sealing body (5).

2. Throttle valve as defined in Claim 1, wherein the sealing body (5) is of thermoplastics (e. g. POM) in one piece with the inner, lip-shaped sealing part (23) which contacts the outer circumference of the adjustment end of the throttle screw with radial preloading.

3. Throttle valve as defined in Claim 1 or Claim 2, wherein the sealing body (5) has in the area of the inner sealing part (23) an outer circumferential groove (21) which engages the outer annular sealing part (22) of a highly elastic material (rubber) which has much greater elasticity than the sealing body (5) with the inner sealing part (23).

4. Throttle valve as defined in one or more of the preceding Claims, wherein the sealing body (5) has, at the other end (16) facing towards the shoulder (15) of the communication chamber (4), at least one opening which adjoings the inner sealing part (23) and which connects the fluid through the throttle screw (32) to one of the fluid ports (3).

5. Throttle valve as defined in one or more of Claims 1 to 3, wherein the sealing body (5) has at its other end (16) a multitude of relatively small longitudinal slots which are distributed evenly around the circumference of the sealing body (5) and which run off to the end.

6. Throttle valve as defined in Claim 5, wherein the one end section of the sealing body facing towards the cover (13) consists of an axially rather narrow closed ring section (19) which encompasses the adjustment end (6) of the throttle screw (7) with a certain clearance, wherein there is adjoining one end section a further, axially rather narrow centre ring section (20) which is furnished on the outside with the circumferential groove (21) for engaging the outer sealing part (22) and on the inside with the inner sealing lip (23), and wherein there is adjoining the centre ring section (20) the axially relatively longer section (24) faces towards the shoulder (15) of the space (4) and consists of several segments (25) separated from one another by radial slots, which segments (25) are directly adjacent to the inner sealing lip (23), encompass the adjustment end (6) of the sealing body (1) with a certain clearance and are supported by the adjustment end (6) of the throttle screw (7) via cam-like projections (26) facing radially inwards.

7. Throttle valve as defined in one or more of the preceding Claims, wherein there are on the inside of the cover (13) several ribs (30) distributed evenly around the circumference, which ribs project beyond the inner cover rim (27) and support the deformation zone (31) of the sealing body.

8. Throttle valve as defined in one or more of the preceding Claims, wherein, with the sealing body (5) installed, the radially outer sealing element (22) rests with a free ring section on the seat surface (14) of the valve body (1) under radial preloading so as to form a non-return valve (14, 22), and wherein there is optionally a supporting ring (33) which is supported by the cover and which clamps the free ring section of radially outer sealing element (22) between itself and the seat surface (14) so as to cut out the non-return function (Fig. 2).

9. Throttle valve as defined in Claim 1, wherein the sleeve-shaped sealing body (5) has, when clamped in place, a barrel-shaped form arched slightly inwards and is clamped between the shoulder (15) in the space (4) of the valve body (1) and the cover (13) in a manner exerting a force directed radially inwards.

10. Throttle valve as defined in Claim 9, wherein the radially inner sealing part (23) is an annular cylinder section.

11. Throttle valve as defined in one or more of the preceding Claims, wherein the space (4) and the access opening (12) are, in essence, axially symmetrical relative to the axis of the throttle screw (7) and wherein the axially successive sections (14, 15, 17) of the space (4) decrease increasingly in diameter from the outer edge of the access opening (12) to the bore (10) for the throttle screw (7).

**Revendications**

1. Soupape d'étranglement, par exemple soupape de retenue à étranglement, comportant un corps de soupape (1), une chambre de liaison (4), étanche au milieu de pression par rapport à l'extérieur et prévue dans le corps de soupape (1) entre deux raccords (2, 3) pour le milieu sous pression, une vis de réglage de l'étranglement (7), engagée dans un perçage fileté (10) du corps de soupape (1), transversalement aux raccords (2, 3) pour le milieu sous pression, se terminant par une extrémité cylindrique (6) de réglage, avec au moins une gorge d'étranglement (32) s'amincissant à partir de l'extrémité et pénétrant par l'extrémité de réglage (6) dans la chambre de liaison (4), et un dispositif d'étanchéité (5 ; 21, 22 ; 23, 6) monté dans la liaison pour le milieu sous pression entre les raccords (2, 3) pour le milieu sous pression, dispositif d'étanchéité qui porte d'une part, par un premier élément annulaire d'étanchéité (22) radialement extérieur, et possédant une fonction de retenue, contre une surface de siège (14), d'allure circulaire, de la chambre de liaison (4), et, d'autre part, par un second élément annulaire d'étanchéité (23) radialement intérieur, dans la zone de la gorge de l'extrémité de réglage (6) de la vis d'étranglement (7), avec étanchéité contre la périphérie extérieure de l'extrémité de réglage (6), ledit dispositif d'étanchéité étant constitué par un corps d'étanchéité (5) de la forme d'une douille et traversé par l'extrémité de réglage (6), alors que ledit corps d'étanchéité (5) est pourvu de l'élément d'étanchéité extérieur et de l'élément d'étanchéité intérieur (22, 23) et est serré entre un épaulement intérieur (15) de la chambre de liaison (4) et un couvercle (13) du corps de soupape (1), qui pénètre avec étanchéité dans une ouverture de montage (12) de la chambre de liaison, qui est coaxiale à la vis d'étranglement (7), caractérisée par le fait que le corps d'étanchéité (5) prend appui par ses deux extrémités (16, 19) entre le couvercle (13) et l'épaulement (15) de la chambre intermédiaire (4) du corps de soupape (1), en vue de compenser les tolérances lors de son montage axial serré, et comporte une zone déformable (31) qui n'influence pas la fonction d'étanchéité des éléments d'étanchéité (22, 23) et qui est constituée par une bande étroite d'un matériau d'une pièce avec le corps d'étanchéité (5), située du côté du corps d'étanchéité (5) qui est proche du couvercle (13), et que l'épaulement (15) se raccorde, dans la chambre intermédiaire (4) du corps de soupape (1), en vue de l'appui de l'autre extrémité (16) du corps d'étanchéité (5), à un élément auxiliaire détalonné (17), servant à recevoir une bague d'étanchéité (18) qui rend étanche la fente entre le corps de soupape (1) et la vis d'étranglement (7) et qui prend appui sur l'autre extrémité (16) du corps d'étanchéité (5).

2. Soupape d'étranglement selon la revendication 1, caractérisée par le fait que le corps d'étanchéité (5) est fait avec une matière thermoplastique (par exemple POM) et est venu d'une pièce avec l'élément d'étanchéité intérieur (23) se présentant sous la forme d'une lèvre, lequel élément d'étanchéité (23) prend appui, avec contrainte préalable, sur la périphérie extérieure de l'extrémité de réglage de la vis d'étranglement.

3. Soupape d'étranglement selon la revendication 1 ou 2, caractérisée par le fait que le corps d'étanchéité (5) comporte, dans la partie qui concerne l'élément d'étanchéité intérieur (23), une gorge périphérique extérieure (21), dans laquelle pénètre l'élément d'étanchéité extérieur (22) de forme annulaire et fait avec un matériau fortement élastique (caoutchouc), qui possède une élasticité notablement plus grande que le corps d'étanchéité (5) avec l'élément d'étanchéité intérieur (23).

4. Soupape d'étranglement selon une ou plusieurs des revendications précédentes, caractérisée par le fait que le corps d'étanchéité (5) comporte à son autre extrémité (16), qui est voisine de l'épaulement (15) de la chambre de liaison (4), une ouverture qui jouxte l'élément d'étanchéité intérieur (23) et qui relie à l'un (3) des raccords du milieu sous pression qui passe par la gorge d'étranglement (32).

5. Soupape d'étranglement selon une ou plusieurs des revendications 1 à 3, caractérisée par le fait que le corps d'étanchéité (5) comporte à son autre extrémité (16) un grand nombre de fentes longitudinales, relativement étroites, qui sont réparties uniformément sur la périphérie du corps d'étanchéité (5) et s'étendent vers l'extrémité.

6. Soupape d'étranglement selon la revendication 5, caractérisée par le fait que la section d'extrémité du corps d'étanchéité, qui est voisine du couvercle (13), est constituée par une section annulaire fermée (19), relativement étroite dans le sens axial, laquelle section annulaire entoure, avec jeu, l'extrémité de réglage (6) de la vis d'étranglement (7), qu'à ladite section d'extrémité se raccorde une seconde section annulaire médiane (20) relativement étroite dans le sens axial, laquelle section annulaire est pourvue, du côté extérieur, de la gorge annulaire (21), pour l'enclenchement de l'élément d'étanchéité extérieur (22), et, du côté extérieur, de la lèvre d'étanchéité intérieure (23), et qu'à la section annulaire médiane (20) se raccorde la section relativement plus longue dans le sens axial, et qui est voisine de l'épaulement (15) de la chambre intermédiaire (4), laquelle section est consituée par plusieurs segments (25) séparés les uns des autres par des fentes radiales, lesdits segments se raccordant directement à la lèvre d'étanchéité intérieure (23), entourant, avec jeu, l'extrémité de réglage (6) du corps d'étanchéité (1) et prenant appui, par l'intermédiaire d'éléments saillants (26), se présentant sous la forme de cames dirigées vers l'intérieur, sur l'extrémité de réglage (6) de la vis d'étranglement (7).

7. Soupape d'étranglement selon une ou plusieurs des revendications précédentes, caractérisée par le fait que sur le côté intérieur du couvercle (13) sont prévues plusieurs languettes (30) réparties uniformément sur la périphérie, lesquelles languettes débordent le bord intérieur (27) du couvercle, et sur lesquelles prend appui la zone déformable (31) du corps d'étanchéité.

8. Soupape d'étranglement selon une ou plusieurs des revendications précédentes, caractérisée par le fait que l'élément d'étanchéité (22) radialement extérieur, porte, à l'état monté du corps d'étanchéité (5), et par une section annulaire libre avec tension préalable radiale, contre la surface de siège (14) du corps de soupape (1), en vue de former une soupape de retenue (14, 22), et qu'il est prévu, au choix, une bague d'appui (33) qui prend appui contre le couvercle et qui, en vue de supprimer la fonction de retenue, enserre l'extrémité annulaire libre de l'élément d'étanchéité radialement extérieur (22), entre lui-même et la surface de siège (14) (figure 2).

9. Soupape d'étranglement selon la revendication 1, caractérisée par le fait que le corps d'étanchéité (5), se présentant sous la forme d'une douille, présente, à l'état serré, une forme faiblement en tonneau, incurvée vers l'intérieur, et il est serré, de manière à exercer une force de pression, dirigée radialement vers l'intérieur, sur l'élément d'étanchéité intérieur (23), entre l'épaulement (15) situé dans la chambre intermédiaire (4) du corps de soupape (1) et le couvercle (13).

10. Soupape d'étranglement selon la revendication 9, caractérisée par le fait que l'élément d'étanchéité radialement intérieur (23) est une section cylindrique de forme annulaire.

11. Soupape d'étranglement selon une ou plusieurs des revendications précédentes, caractérisée par le fait que la chambre intermédiaire (4) et l'ouverture de montage (12) sont conformées, par rapport à l'axe de la vis d'étranglement (7), sensiblement symétriquement par rapport à l'axe et que les sections (14, 15, 17) de la chambre intermédiaire (4), qui se succèdent les unes aux autres, possèdent des diamètres qui diminuent de façon croissante du bord extérieur de l'ouverture de montage (12) vers le perçage (10) pour la vis d'étranglement (7).

Fig. 1

Fig. 2